# EUROPEAN PATENT SPECIFICATION

(11) **EP 2 235 364 B1**
(45) Date of publication and mention of the grant of the patent: **23.10.2013**
(21) Application number: 07869969.1
(22) Date of filing: 27.12.2007
(51) Int. Cl.: F03D 1/06

(54) **FLEXIBLE WIND BLADE ROOT BULKHEAD FLANGE**
FLEXIBLER TRENNWANDFLANSCH FÜR DEN SCHAUFELFUSS EINES ROTORBLATTS EINER WINDKRAFTANLAGE
REBORD FLEXIBLE DE BOUCLIER DE PIED DE PALE D'ÉOLIENNE

(43) Date of publication of application: 06.10.2010
(73) Proprietor: GENERAL ELECTRIC COMPANY, Wilmington NC 28401 (US)
(72) Inventor: JACOBSEN, Eric M., Greenville SC 29607 (US)
(74) Representative: Bedford, Grant Richard
(86) International application number: PCT/US2007/088925
(87) International publication number: WO 2009/085041

(56) References cited:
- EP-A- 1 151 917
- WO-A-2006/069575
- DE-U1- 29 618 525
- US-A- 3 734 642
- US-A- 4 260 332
- US-A- 5 062 589

## Description

### FIELD OF THE INVENTION

The present invention is generally directed to wind turbines. More specifically, the present invention is directed to a flexible flange for stress relief for a wind blade root bulkhead.

### BACKGROUND OF THE INVENTION

Recently, wind turbines have received increased attention as environmentally safe and relatively inexpensive alternative energy sources. With this growing interest, considerable efforts have been made to develop wind turbines that are reliable and efficient.

Generally, a wind turbine includes a rotor having multiple blades. The rotor is mounted to a housing or nacelle, which is positioned on top of a truss or tubular tower. Utility grade wind turbines (i.e., wind turbines designed to provide electrical power to a utility grid) can have large rotors (e.g., 30 or more meters in length). In addition, the wind turbines are typically mounted on towers that are at least 60 meters in height. Blades on these rotors transform wind energy into a rotational torque or force that drives one or more generators.

Wind turbine blades sustain large forces during operation which commonly cause the blade cross section in substantially the inboard 25% of span to ovalize significantly. A bulkhead is needed in substantially the inboard 25% span of the blade to ensure workers do not fall into the blade when performing maintenance and repairs and to keep internal blade debris from falling into the machinery in the hub. The ovalization, or distorted movement of the blade cross section, may cause damage to the blade root or the connection between the blade and the bulkhead where the bulkhead and root meet, if the bulkhead is rigidly attached to the blade wall.

In some systems, steel rods or composite bracket arrangements have been used to connect the bulkhead to the blade root. However, these arrangements have many small parts that may come loose, need secondary sealing around the blade bulkhead, and/or have been subject to rapid field failure. In other systems, separate rubber supports and seals were used at the bulkhead, but these separate rubber supports were subject to aging, wear, and additional expense. In yet another system, the bulkhead and connection with the blade wall is reinforced in attempt to resist the high loads and stop the ovalization, but this involves costly addition of material and risk of failure in the joint.

WO 2006/069575 discloses a wind turbine blade equipped internally with collection means to collect dust and the like.

Therefore, what is needed is a method and system for supporting and sealing a blade root bulkhead with enough flexibility to avoid damaging the attachment joint.

### SUMMARY OF THE INVENTION

Various aspects and embodiments of the present invention are defined in the appended claims.

An advantage of an embodiment of the present invention is no secondary seal is needed.

Another advantage of an embodiment of the present invention is that no extra material is necessary to assist in stiffening the blade against cross section ovalization or deformation.

Yet another advantage of an embodiment of the present invention is that the flange is cost effective.

Still another advantage of an embodiment of the present invention is that the flange is not subject to rot or oil damages during operation of the rotor.

Another advantage of an embodiment of the present invention is that the flexible material of the flange supports the blade root and bulkhead while maintaining a flexible and durable seal to prevent liquid and other unwanted pollution from entering the blade hub and damaging the machinery.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 shows a side elevational view of a wind turbine according to an embodiment of the present disclosure.

FIG. 2 shows a top perspective view of a wind turbine blade according to an embodiment of the present disclosure.

FIG. 3 is an illustration of the flexible flange.

FIG. 4 is a side view of the flexible flange, taken along prospective 4-4 in FIG. 3.

FIG. 5 is an enlarged sectional view of section 5 taken from FIG. 4.

FIG. 6 is a partial sectional view of a section taken from FIG. 5.

FIG. 7 is an enlarged view of the flexible flange disposed in the blade root.

### DETAILED DESCRIPTION OF THE INVENTION

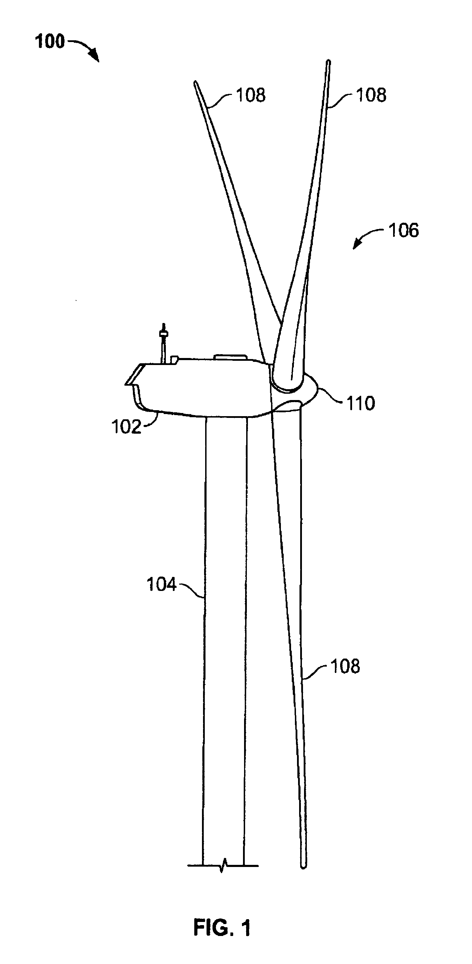

FIG. 1 shows a wind turbine 100 having a nacelle 102 housing a generator (not shown in FIG. 1). Nacelle 102 is a housing mounted atop a tower 104, only a portion of which is shown in FIG. 1. The height of tower 104 is selected based upon factors and conditions known in the art, and may extend to heights up to 60 meters or more. The wind turbine 100 may be installed on any terrain providing access to areas having desirable wind conditions. The terrain may vary greatly and may include, but is not limited to, mountainous terrain or off-shore locations. Wind turbine 100 also comprises a rotor 106 that includes one or more rotor blades 108 attached to a rotating hub 110. Although wind turbine 100 illustrated in FIG. 1 includes three rotor blades 108, there are no specific limits on the number of rotor blades 108 required by the present disclosure.

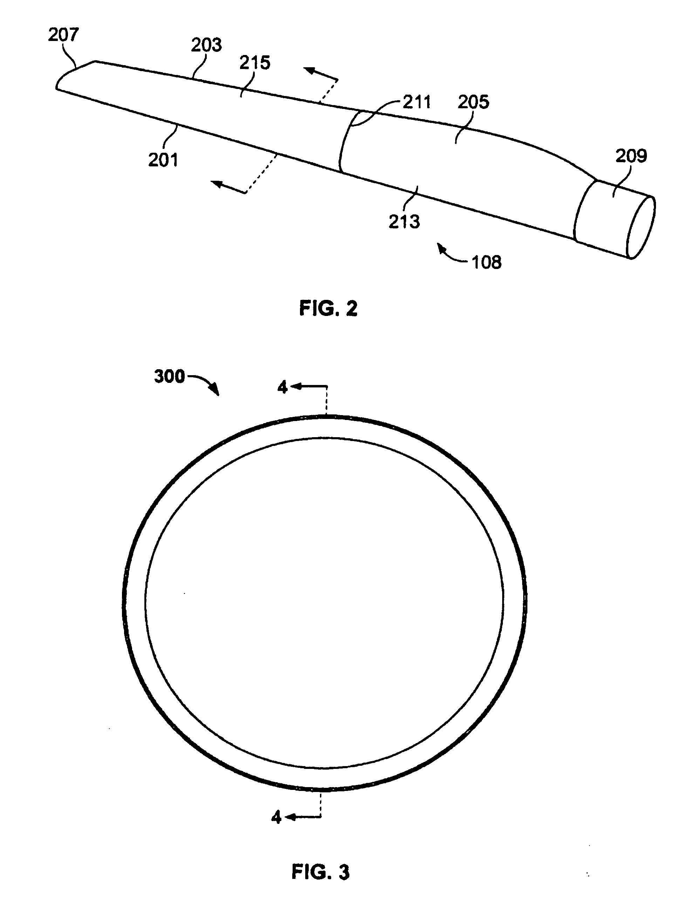

FIG. 2 illustrates a turbine blade 108 according to an embodiment of the present disclosure having a leading edge 201 and a trailing edge 203. The turbine blade 108 includes an airfoil portion 205 extending from the tip 207 to the root 209, which is connectable to the hub 110 of the wind turbine. The blade includes a bonded joint 211 dividing a first segment 213 of the blade 108 from the second portion of the blade 108. The first segment 213 and the second segment 215 are segments of the blade 108, which are assembled together to provide a complete blade 108. By segment, it is meant that the wind turbine blade 108 is divided into a plurality of components that, when assembled together, form a complete blade 108. Although FIG. 2 shows a blade 108 having two segments, the disclosure is not limited to two segments. For example, blade 108 may be a single segment or divided into any number of segments including three or more segments.

FIG. 3 illustrates an embodiment of the substantially circular flexible flange 300 of the present invention. While the flexible flange 300 is shown as being circular, it is appreciated by those of ordinary skill in the art that the flexible flange 300 may have an oval or other similar shape. The flexible flange 300 has a rim that helps to seal the mechanical components in the hub (not shown).

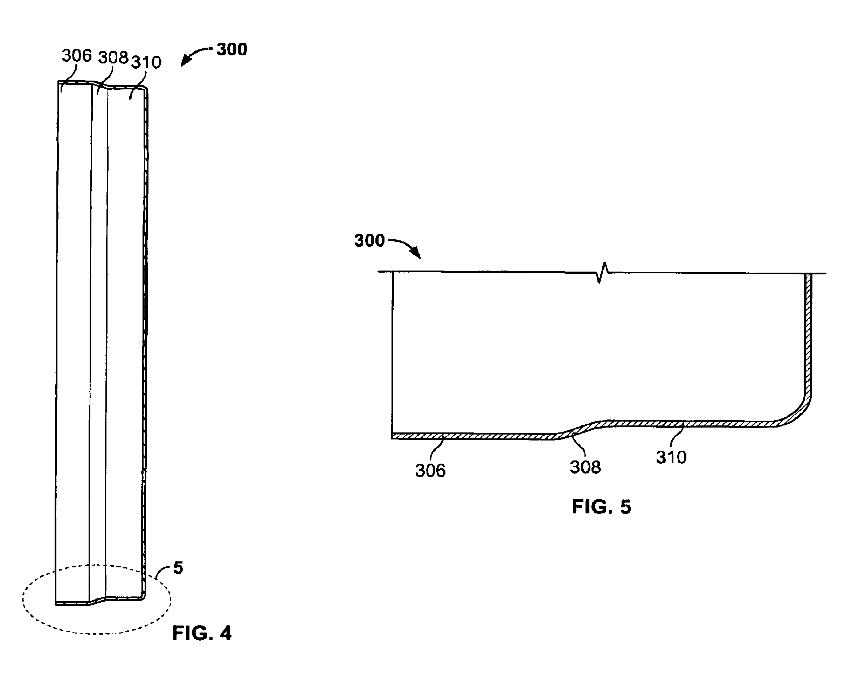

As seen in FIG. 4, and in more detail in FIG. 5, the flexible flange 300 has a top portion 306 that leads into an angled portion 308, which leads into a bottom portion 310. The angled portion 308 offsets the bottom portion 310 from the top portion 306 by a predetermined distance. The predetermined distance may be any distance from greater than zero to one hundred millimeters. For example, the angled portion may offset the top portion 306 from the bottom portion 310 by ten millimeters. The flexible flange 300 also has a rim, which extends from the bottom portion 310 at a predetermined angle. One embodiment, as shown in the FIGS., includes the rim portion extending from the bottom portion 310 at a substantially perpendicular angle to the bottom portion 310.

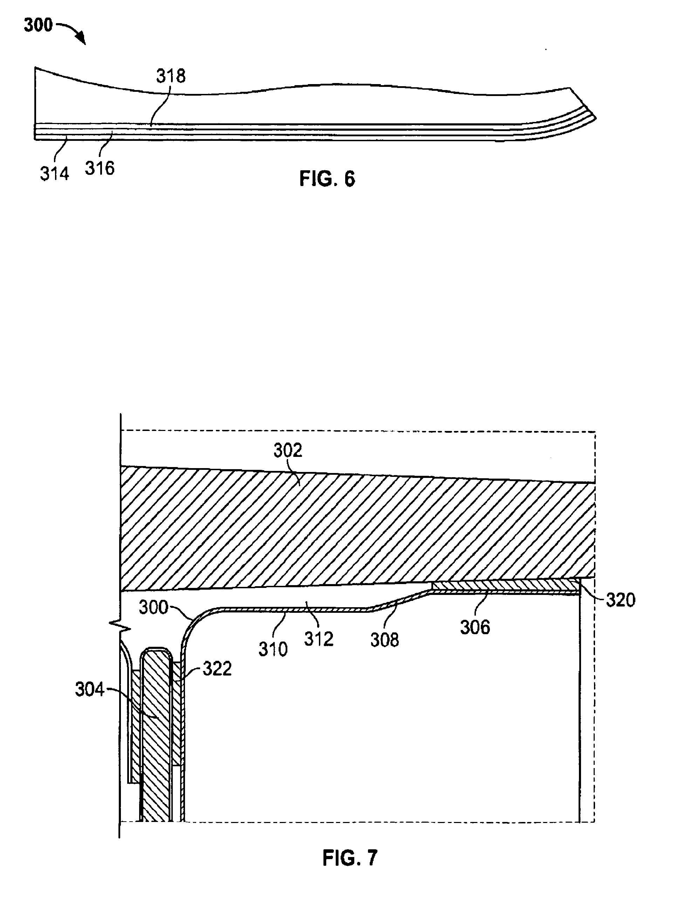

FIG. 6 illustrates the various layers on the flexible flange 300 in a partial sectional view of an exemplary flexible flange 300. The flexible flange 300 has several layers of material to create the flexibility necessary to allow the blade root wall 302 movement, while providing support for the blade root. One embodiment includes the layers of the flexible flange being an epoxy resin layer 314, an epoxy hardener layer 316 and a biaxial glass layer 318. It is appreciated by those or ordinary skill in the art that any suitable material may be used for the flexible flange, including, but not limited to metal, composite materials, fiber reinforced plastic, or other materials In addition, more or less layers may be used to form the flexible flange, depending on the materials used.

Referring now to FIG. 7, which illustrates the flexible flange 300 as disposed in a blade root, the top portion 306 is secured to the blade root wall 302 with an epoxy 320, adhesive or other suitable sealant or bonding compound. The rim is secured to the bulkhead 304 with the same or similar epoxy 322, adhesive, or other suitable sealant or bonding compound. When disposed within the blade root and secured to the blade root wall 302 with the adhesive 320, a gap 312 is formed between the angle portion 308 and the blade root wall 302 and the bottom portion 310 and the blade root wall 302. This gap 312 allows the blade root wall 302 to have movement toward the bulkhead 304 and away from the bulkhead 304. When the blade root wall 302 has such movement, the flexible flange 300 absorbs a portion of the force of the blade root wall 302 and maintains connections between the blade root and the bulkhead 304.

One embodiment (not shown) not falling within the scope of protection of the claims includes the angled portion 308 having a zero degree angle and the top portion 306 having zero offset from the bottom portion 310. In this embodiment, no gap 312 is formed between the flexible flange 300 and the angle portion 308 or the flexible flange 300 and the bottom portion 310. The blade root wall 302 is still capable of movement away from the bulkhead 304 and the flexible flange 300 absorbs a portion of the force of the blade root wall 302 and maintains connections between the blade root and the bulkhead 304.

In addition to providing a flexible and strong support for the blade root wall, the flexible flange 300 acts as a sealant that seals the machinery in the blade hub (not shown) from water and bonding compounds. When the flexible flange 300 is used, no other bracket or sealant is needed for reinforcement or sealing purposes. Further, the flexible flange 300 allows movement of the blade root wall 302, but has sufficient strength and stiffness to support the bulkhead 304 or support the weight of any workers who may need to perform service or repairs to the flange or the blade root.

One embodiment includes the flexible flange 300 being integral with the bulkhead 304, where the rim is bonded to the bulkhead with an adhesive or other suitable similar material. Another embodiment includes the flexible flange 300 being integral with the blade root wall 302, where the top portion is bonded to the blade root wall 302 with an adhesive or other suitable material.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A wind turbine blade (108) comprising a bulkhead (304) in a wind turbine blade root (209) thereof, said wind turbine blade (108) comprising:
said bulkhead (304) disposed within the wind turbine blade root (209), the wind turbine blade root (209) having a blade root wall (302); **characterised by**:
a flexible flange (300) being integrated with the bulkhead (304), the flexible flange (300) further comprising:
a top portion (306) configured to contact the blade root wall (302);
an angled portion (308) having a first predetermined angle extending from the top portion;
a bottom portion (310) extending from the angled portion and offset from the top portion; and
a rim portion extending from the bottom portion at a second predetermined angle and configured to be secured to the bulkhead (304);
wherein the rim portion is secured to the bulkhead (304), wherein the flexible flange (300) tolerates movement of the blade root wall (302), and wherein the flexible flange seals the blade root (209).

2. The wind turbine blade (108) of claim 1 wherein the flexible flange (300) is secured to the bulkhead (304) with an adhesive.

3. The wind turbine blade (108) of claim 1 or claim 2 wherein the first predetermined angle is an angle suitable to offset the top portion (306) from the bottom portion (310) a predetermined distance.

4. The wind turbine blade (108) of claim 3 wherein the predetermined distance is greater than zero millimeters and a maximum of 100 millimeters wide between the flexible flange and the blade root wall (302) and wherein the flexible flange (300) tolerates movement of the blade root wall toward the bulkhead (304) and away from the bulkhead.

## Patentansprüche

1. Rotorblatt (108) einer Windkraftanlage, mit einer Trennwand (304) in einem Fuß (209) des Rotorblatts, wobei das Rotorblatt (108) aufweist:
die in dem Fuß (209) des Rotorblattes angeordnete Trennwand (304), wobei der Fuß (209) des Rotorblattes eine Fußwand (302) des Blattes besitzt;
**gekennzeichnet durch**:
einen in die Trennwand (304) integrierten flexiblen Flansch (300), wobei der flexible Flansch (300) ferner aufweist:
einen oberen Abschnitt (306), der für einen Kontakt mit der Fußwand (302) des Blattes eingerichtet ist;
einen angewinkelten Abschnitt (308) mit einem ersten vorbestimmten Winkel, der sich von dem oberen Abschnitt aus erstreckt;
einen unteren Abschnitt (310), der sich von dem angewinkelten Abschnitt aus und gegenüber dem oberen Abschnitt versetzt erstreckt; und
einen Randabschnitt, der sich von dem unteren Abschnitt in einem zweiten vorbestimmten Winkel erstreckt und zur Befestigung an der Trennwand (304) eingerichtet ist;
wobei der Randabschnitt an der Trennwand (304) befestigt ist, wobei der flexible Flansch (300) eine Bewegung der Fuß wand (302) des Blattes toleriert, und wobei der flexible Flansch den Fuß (209) des Blattes abdichtet.

2. Rotorblatt (108) nach Anspruch 1, wobei der flexible Flansch (300) an der Trennwand (304) mit einem Kleber befestigt ist.

3. Rotorblatt (108) nach Anspruch 1 oder Anspruch 2, wobei der erste vorbestimmte Winkel ein Winkel ist, der dazu geeignet ist, den oberen Abschnitt (306) gegenüber dem unteren Abschnitt (310) über eine vorbestimmte Strecke zu versetzen.

4. Rotorblatt (108) nach Anspruch 3, wobei die vorbestimmte Strecke größer als 0 mm und maximal 100 mm breit zwischen dem flexiblen Flansch und der Fußwand (302) des Blattes ist, und wobei der flexible Flansch (300) eine Bewegung des Fußes des Blattes auf die Trennwand (304) zu und von der Trennwand weg toleriert.

## Revendications

1. Pale (108) d'éolienne, comportant une cloison (304) dans une emplanture (209) de ladite pale d'éolienne, ladite pale (108) d'éolienne comportant :
ladite cloison (304) disposée dans l'emplanture (209) de la pale d'éolienne, l'emplanture (209) de pale d'éolienne ayant une paroi (302) d'emplanture de pale, **caractérisée par** :
une collerette flexible (300) intégrée avec la cloison (304), la collerette flexible (300) comprenant en outre :
une partie supérieure (306) conçue pour être au contact de la paroi (302) d'emplanture de pale ;
une partie oblique (308) à première inclinaison prédéterminée, s'étendant depuis la partie supérieure ;
une partie inférieure (310) s'étendant depuis la partie oblique et décalée par rapport à la partie supérieure ; et
une partie formant rebord s'étendant depuis la partie inférieure avec une seconde inclinaison prédéterminée et conçue pour être fixée à la cloison (304) ;
la partie formant rebord étant fixée à la cloison (304), la collerette flexible (300) tolérant les mouvements de la paroi (302) d'emplanture de pale et la collerette flexible assurant l'étanchéité de l'emplanture (209) de pale.

2. Pale (108) d'éolienne selon la revendication 1, dans laquelle la collerette flexible (300) est fixée par collage à la cloison (304).

3. Pale (108) d'éolienne selon la revendication 1 ou la revendication 2, dans laquelle la première inclinaison prédéterminée est une inclinaison permettant de décaler la partie supérieure (306) d'une distance prédéterminée par rapport à la partie inférieure (310).

4. Pale (108) d'éolienne selon la revendication 3, dans laquelle la distance prédéterminée est une largeur supérieure à zéro millimètre et d'un maximum de 100 millimètres entre la collerette flexible et la paroi (302) d'emplanture de pale, et dans laquelle la collerette flexible (300) tolère des mouvements de rapprochement et d'éloignement de la paroi d'emplanture de pale par rapport à la cloison (304).
